# EUROPEAN PATENT SPECIFICATION

(11) **EP 4 113 175 B1**
(45) Date of publication and mention of the grant of the patent: **29.01.2025**
(21) Application number: 21182867.8
(22) Date of filing: 30.06.2021
(51) Int. Cl.: G01W 1/08, G01D 11/24

(54) **RADIOSONDE AND METHOD OF MANUFACTURING A RADIOSONDE**
RADIOSONDE UND VERFAHREN ZUR HERSTELLUNG EINER RADIOSONDE
RADIOSONDE ET PROCÉDÉ DE FABRICATION D'UN RADIOSONDE

(43) Date of publication of application: 04.01.2023
(73) Proprietor: VAISALA OYJ, 01670 Vantaa (FI)
(72) Inventor: JUNTTILA, Janne, 01670 Vantaa (FI)
(74) Representative: Laine IP Oy

(56) References cited:
- CN-U- 207 964 104
- DE-U1- 202013 104 586
- JP-B2- 3 207 539
- US-B2- 10 353 114

## Description

### FIELD

The present invention relates to a radiosonde.

Additionally, the present invention relates to a method of manufacturing a radiosonde.

### BACKGROUND

Various radiosondes are known and widely used for studying the atmosphere. Radiosondes typically transmit data such as GPS location, temperature, humidity, and pressure back to a ground station.

Document DE 202013104586 U1, for example, discloses a radiosonde comprising measurement and telecommunication electronics, an energy supply, a measurement boom having at least one sensor, a string pin as well as a balloon coupled to the string pin via a string. The string pin comprises an attachment and tilting means by means of which the measurement boom can be tilted into a predetermined position when the string pin is installed. Further, document CN 207964104 U describes a device comprising a temperature sensor, a data logger and a heat insulating box. Additionally, document US 10,353,114 B2 discloses a dual cap for protecting a humidity sensor of a radiosonde. The dual cap includes an outer cap and an inner cap. The dual cap surrounds the humidity sensor.

Once the balloon has arrived at a certain altitude and bursts, the radiosonde falls back to earth. A small parachute may be provided to reduce the risk of damage to life and property when the radiosonde reaches the ground. Less than 20 % of the launched radiosondes are recovered. While radiosondes are usually physically capable of reuse, the issue lies in the lack of recovery effort. As a consequence, the different parts of the radiosondes launched around the world typically remain in nature.

### SUMMARY OF THE INVENTION

The invention is defined by the features of the independent claims. Some specific embodiments are defined in the dependent claims.

According to an aspect of the present invention, there is provided a radiosonde comprising a first housing, a measurement boom partially extending through a part of the first housing, wherein the first housing is made of a first biodegradable material, the radiosonde further comprises a second housing arranged within the first housing, wherein the second housing is made of a second biodegradable material, wherein the second housing comprises a plurality of protrusions arranged on an outer surface of the second housing or wherein the first housing comprises a plurality of protrusions arranged on an inner surface of the first housing, wherein a printed circuit board is arranged within the second housing and the measurement boom is coupled to the printed circuit board, and wherein the measurement boom coupled to the printed circuit board further partially extends through a part of the second housing.

Various embodiments of the first aspect may comprise at least one feature from the following bulleted list:
- at least one of the protrusions is a rib, a spacer or a stud
- the first housing comprises at least two separate covers, for example a first cover and a second cover
- the radiosonde comprises at least one coupler configured to couple the first cover to the second cover
- the at least one coupler comprises a first strap and a second strap configured to be coupled to each other, or the at least one coupler comprises a stapler rivet or a stud
- the at least one coupler is configured to be wrapped around the first cover and the second cover
- the at least one coupler is made of biodegradable material
- the radiosonde comprises a string pin configured to be coupled to the radiosonde, the first housing or the at least one coupler
- the string pin is configured to bend or tilt the measurement boom into its measurement position when being coupled to the radiosonde, the first housing or the at least one coupler
- the material of the first housing is pulp, recycled pulp, or wood fibre pulp
- the first housing comprises a cut portion forming a first feedthrough for the measurement boom
- the second housing comprises at least two separate parts, for example a first part and a second part
- the material of the second housing is plant-based material
- the radiosonde comprises an energy supply, for example at least one battery
- the energy supply is arranged within the second housing
- the printed circuit board comprises measurement and telecommunication electronics
- each protrusion of the plurality of protrusions has a thickness in the range between 1 mm and 10 mm, preferably less than 5 mm, for example less than 3 mm or less than 2 mm
- the second housing comprises protrusions in longitudinal, transverse and vertical direction, i.e. perpendicular or substantially perpendicular to each other
- an air pocket or air channel is formed between two adjacent protrusions of the plurality of protrusions

According to an aspect of the present invention, there is provided a method of manufacturing a radiosonde, the method comprising providing a first housing, coupling a measurement boom to the first housing such that the measurement boom partially extends through a part of the first housing, making the first housing of a first biodegradable material, arranging a second housing within the first housing, wherein the second housing is made of a second biodegradable material, arranging a plurality of protrusions on an outer surface of the second housing or arranging a plurality of protrusions on an inner surface of the first housing, arranging a printed circuit board within the second housing, and coupling the measurement boom to the printed circuit board such that the measurement boom further partially extends through a part of the second housing.

Various embodiments of the second aspect may comprise at least one feature from the following bulleted list:
- the method further comprising providing a cut portion through the first housing prior to coupling the measurement boom, for example by using a knife or cutter or arranging a part of the measurement boom between two covers of the first housing,
- providing a cut portion through a surface of the first housing facing towards the balloon during rising of the radiosonde, through a surface of the first housing facing upstream during rising of the radiosonde, through a side surface of the first housing
- the method yet further comprising coupling a first cover of the first housing to a second cover of the first housing by at least one coupler
- the method even further comprising coupling a string pin to the at least one coupler, thus tilting or bending the measurement boom into its measurement position
- coupling the string pin to the at least one coupler by sliding a part of the string relative to a part of the at least one coupler

Considerable advantages are obtained by means of certain embodiments of the present invention. A radiosonde and a method of manufacturing a radiosonde are provided.

Certain embodiments of the present invention provide a radiosonde with improved thermal insulation of the printed circuit board due to arrangement of the printed circuit board within a second housing having a plurality of protrusions in the form of ribs. An air pocket or air channel is provided between two adjacent ribs, the outer surface of the second housing and the inner surface of the first housing. The air pockets or air channels reduce the contact area between the first housing and the second housing. Only relatively thin ribs conduct heat. Heat transfer from within the second housing can be therefore reduced. Further, heat produced by the printed circuit board as well as the energy supply can be guided from within the second housing to the air pockets or air channels. Thus, a thermal insulation layer is provided between the inner surface of the first housing and the outer surface of the second housing. Air pockets further prevent movement of air between the first housing and the second housing, and thus an effective thermal insulation layer is formed.

Further, certain embodiments of the present invention provide a radiosonde with improved impermeability to water due to the "housing-in-housing" solution.

Additionally, at least some of the components of the radiosonde according to certain embodiments may be made of biodegradable material. According to the invention, the first housing is made of a first biodegradable material. The first housing may comprise a cut portion forming a feedthrough for the measurement boom. Once the measurement boom is installed, the first biodegradable material presses against the surfaces of the measurement boom due to the material characteristics, thus providing an impermeable or water tight feedthrough. Additional elements such as a seal are not required for the first feedthrough. Alternatively, a part of the measurement boom is arranged between two covers of the first housing. The printed circuit board is further protected by the second housing arranged within the first housing. According to the invention, the second housing is made of a second biodegradable material. The measurement boom is guided through a second feedthrough in the second housing and coupled to the printed circuit board. At least one coupler, for example in the form of a string comprising two elements, may be wrapped around the first housing in order to form the radiosonde package. The at least one coupler may be made of a third biodegradable material. Use of chemical components such as adhesive is not required. Also the string pin and/or the string may at least partially comprise biodegradable material. Therefore, less parts of the radiosonde remain in nature over time and environmental pollution can be reduced. Use of biodegradable material for at least some of the different parts of the radiosonde further results in a lightweight construction of the radiosonde. Additionally, the first housing and the second housing are somewhat flexible, and thus less damage can be created due to an impact of the radiosonde when the radiosonde reaches the ground.

According to certain embodiments, the material of the first housing is preferably somewhat impermeable to water in order to avoid water from entering the first cavity within the first housing. Further, the material of the second housing is preferably capable of absorbing water that has entered the first cavity. The material of the second housing may be, for example, porous. Consequently, the printed circuit board and the energy supply arranged in the second cavity within the second housing are protected against damage caused by water or moisture.

### BRIEF DESCRIPTION OF THE DRAWINGS

FIGURE 1 illustrates a schematic cross-sectional view of a radiosonde in accordance with at least some embodiments of the present invention,
FIGURE 2 illustrates a schematic perspective view of a first cover of a first housing of a radiosonde in accordance with at least some embodiments of the present invention,
FIGURE 3 illustrates a schematic perspective view of a first part of a second housing of a radiosonde in accordance with at least some embodiments of the present invention,
FIGURE 4 illustrates a schematic perspective view of a measurement unit of a radiosonde in accordance with at least some embodiments of the present invention,
FIGURE 5 illustrates a schematic perspective view of a second part of a second housing of a radiosonde in accordance with at least some embodiments of the present invention,
FIGURE 6 illustrates a schematic perspective view of a second cover of a first housing of a radiosonde in accordance with at least some embodiments of the present invention,
FIGURE 7 illustrates a schematic perspective view of a string pin of a radiosonde in accordance with at least some embodiments of the present invention,
FIGURE 8 illustrates a schematic perspective view of a first strap of a coupler of a radiosonde in accordance with at least some embodiments of the present invention, and
FIGURE 9 illustrates a schematic perspective view of a second strap of a coupler of a radiosonde in accordance with at least some embodiments of the present invention.

### EMBODIMENTS

In this document, biodegradable means the capability to be degraded by microorganisms' cell activity by lowering the molar mass of the macromolecules that form the material ultimately turning it into water, carbon dioxide, other gases, minerals and biomass or resulting altered chemical structures and losses in specific/undesirable properties. "Biodegradable" as used herein means, with respect to a material, such as a polymeric material as a whole and/or a substance within a polymeric material, that the polymeric material and/or the substance within is capable of undergoing and/or does undergo biodegradation as defined above in natural environments and in a municipal or industrial solid waste composting facility or home composting, and no more than 10% of the original dry weight mass of the polymeric material and/or substance within remains after the degradation period, for example 30 days, 90 days or 180 days, when ultimately the rest is converted into CO2, water, inorganic compounds and biomass at a rate consistent with other known biodegradable materials without leaving any visible, distinguishable or toxic residue as measured according to the OECD (1992) Guideline for the Testing of Chemicals 301B; Ready Biodegradability - C02 Evolution (Modified Sturm Test) Test incorporated herein by reference.

Examples of biodegradable materials are wood or natural fibres such as cotton or linen. Further examples are biodegradable polyesters or biodegradable polymers of ethylene oxide. Biodegradable materials may also be proteins such as whey, collagen, keratin, silk or soybean, for instance. Additionally, polysaccharides such as cellulose, starch, hemicelluloses, pectins, chitin or glycogen are examples of biodegradable materials. Furthermore, cellulose derivatives such as cellulose acetate or methyl cellulose are examples of biodegradable materials. Regenerated cellulose such as viscose are other example materials. Furthermore, biodegradable example materials may be copolymers and composites from the materials above.

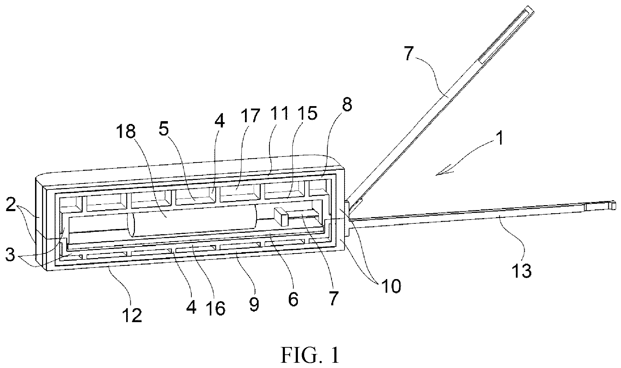

In FIGURE 1 a schematic cross-sectional view of a radiosonde 1 in accordance with at least some embodiments of the present invention is illustrated. The radiosonde 1 comprises a first housing 2. The first housing 2 comprises a first cover 8 and a second cover 9. The material of the first housing 2 may be, for example, a first biodegradable material such as recycled pulp. Recycled pulp is an environmental-friendly biodegradable and 100 % recyclable material. The material can be moulded in the desired three-dimensional form. The material of the first housing 2 is typically impermeable to water in order to avoid water from entering a first cavity within the first housing 2. According to an example, the first cover 8 and the second cover 9 may be attached to each other at one side, like in egg-shell packages.

The radiosonde 1 further comprises a second housing 3 arranged within the first cavity formed by the first housing 2. The second housing 3 comprises a plurality of protrusions 4 arranged on an outer surface 5 of the second housing 3. Alternatively, the first housing 2 may comprise a plurality of protrusions 4 arranged on an inner surface of the first housing 2. A protrusion 4 may be, for example, a stud or a rib as shown in FIGURE 1. An air pocket 17 or air channel is provided between two adjacent ribs 4, the outer surface 5 of the second housing 3 and the inner surface of the first housing 2. The air pockets 17 or air channels reduce the contact area between the first housing 2 and the second housing 3. Heat is only conducted by the relatively thin ribs 4. The thickness of the ribs 4 may be in the range between 1 and 10 mm, for example, 5 mm or 3 mm. Heat transfer from within the second housing 3 can be therefore reduced. The second housing 3 comprises a first part 15 and a second part 16. The material of the second housing 3 may be, for example, a second biodegradable material such as plant-based material. The first part 15 and the second part 16 typically comprise a flange fit. Thus, a second cavity is provided within the second housing 3. The material of the second housing 3 is preferably capable of absorbing water that has entered the first cavity.

A printed circuit board 6 is arranged within the second cavity formed by the second housing 3. The printed circuit board 6 typically comprises measurement and telecommunication electronics. For example, measurement signals received from at least one sensor of the radiosonde 1 may be processed and measurement data may be transmitted by a transmitter to a ground station. Additionally, the radiosonde 1 may comprise a receiver configured to receive signals from an external positioning system such as a GPS satellite.

Additionally, an energy supply or energy source 18 may be arranged within the second housing 3. Typically, at least one battery is arranged within the second housing 3. The battery may be replaceable, for instance.

The radiosonde yet further comprises a measurement boom 7 coupled to the printed circuit board 6. The measurement boom 7 extends from the outside of the first housing 2 through a part of the first housing 2 and through a part of the second housing 3. At least one sensor is comprised by the measurement boom 7. An example of a sensor is a temperature sensor and a humidity sensor.

The radiosonde 1 even further comprises at least one coupler 10 configured to couple the first cover 8 of the first housing 2 to the second cover 9 of the first housing 2. The at least one coupler 10 may, for example, comprise a first strap 11 and a second strap 12. The first strap 11 and the second strap 12 may be configured to be coupled to each other. The at least one coupler 10 may be configured to be wrapped around the first cover 8 and the second cover 9. In such a case, a grove or indentation may be provided in the outer surface of the first housing 2. The grove or indentation may be provided circumferentially in the outer surface of the first housing 2 as shown in FIGURE 1. The material of the at least one coupler 10 may be, for example, a third biodegradable material.

Furthermore, the radiosonde 1 comprises a string pin 13 configured to be coupled to the at least one coupler 10 at one end and to a balloon (not shown) via a string (not shown) at another end. According to certain embodiments, the string pin 13 is configured to tilt or bend the measurement boom 7 into its predetermined measurement position when being coupled to the at least one coupler 10. In the measurement position, the measurement boom is inclined at an angle relative to the string pin 13. The string pin 13 may be, for example, coupled to the at least one coupler 10 by sliding of an end of the string pin 13 relative to a coupling portion comprised by the at least one coupler 10. The material of the string pin 13 may be, for example, at least partially a fourth biodegradable material.

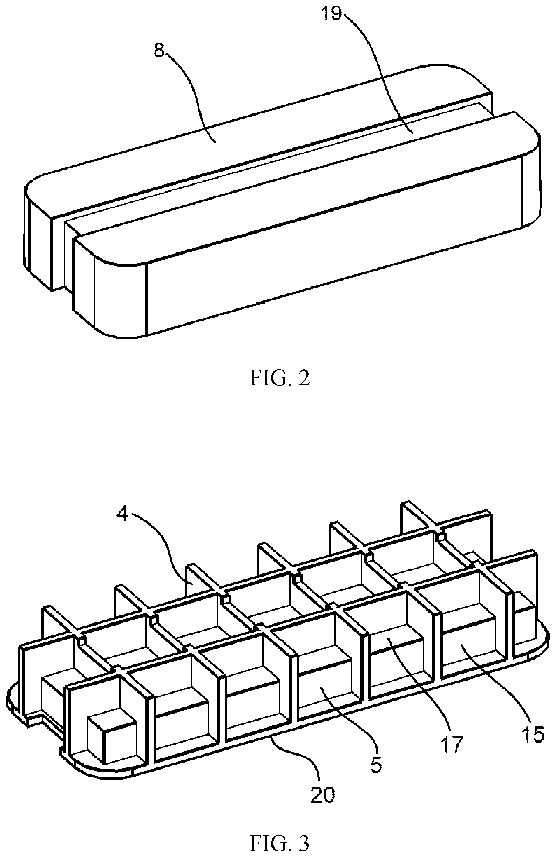

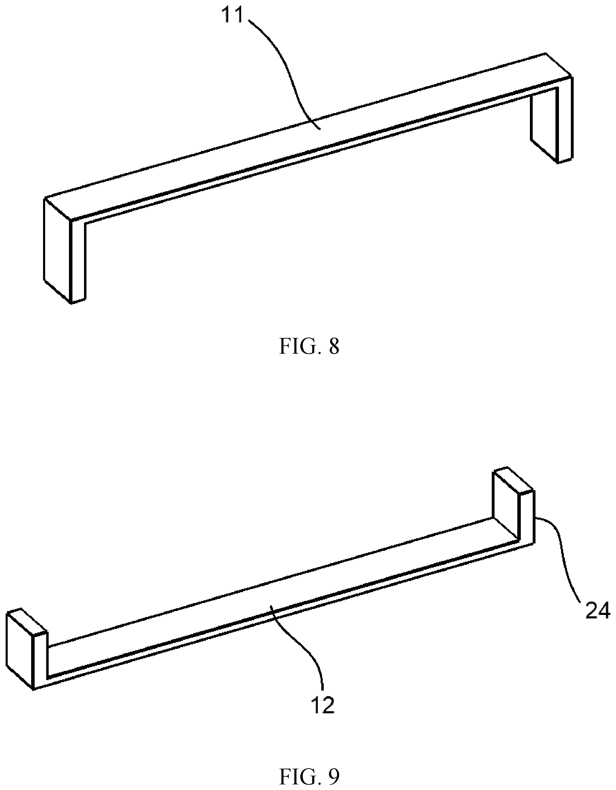

In FIGURE 2 a schematic perspective view of a first cover 8 of a first housing of a radiosonde in accordance with at least some embodiments of the present invention is illustrated. As can be seen, an indentation or a groove 19 is arranged in the outer surface of the first cover 8 in order to provide space for a coupler or a first strap 11 of a coupler as shown in FIGURE 8. The first cover 8 of the first housing may be made of a first biodegradable material such as pulp, recycled pulp or wood fibre pulp, for instance.

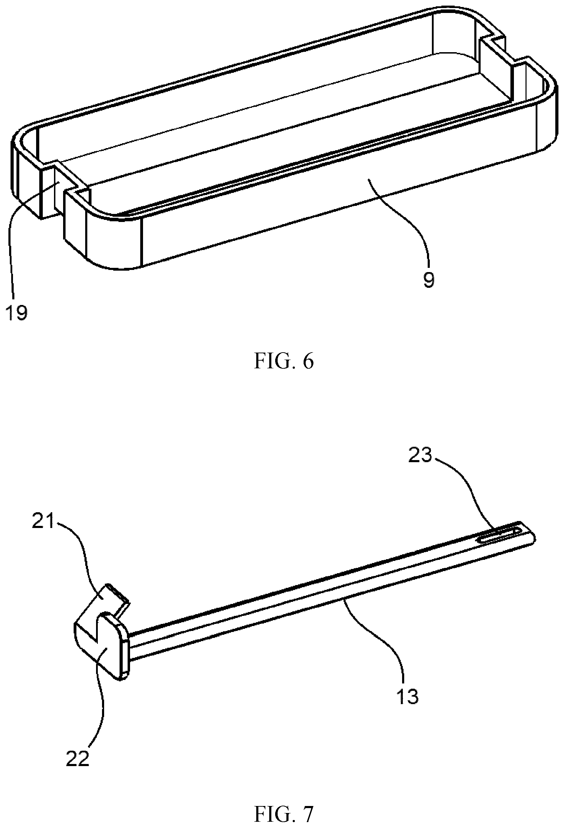

In case that the first cover 8 is made of recycled pulp, a cut portion may be provided through a part of the first cover 8 in order to form a feedthrough for the measurement boom. The cut portion may be made using a knife or cutter, for instance. The cut portion is typically made into a surface of the first cover 8 facing towards the balloon during use of the radiosonde 1. Of course, the cut portion may also be made into another surface of the first cover 8 or the second cover 9 as shown in FIGURE 6. Once the measurement boom is installed, the first biodegradable material presses against the surfaces of the measurement boom due to the material characteristics of the first cover, thus providing an impermeable or water tight feedthrough. Additional elements such as a seal are not required for the first feedthrough. Alternatively, a part of the measurement boom is arranged between the two covers 8, 9 of the first housing 2.

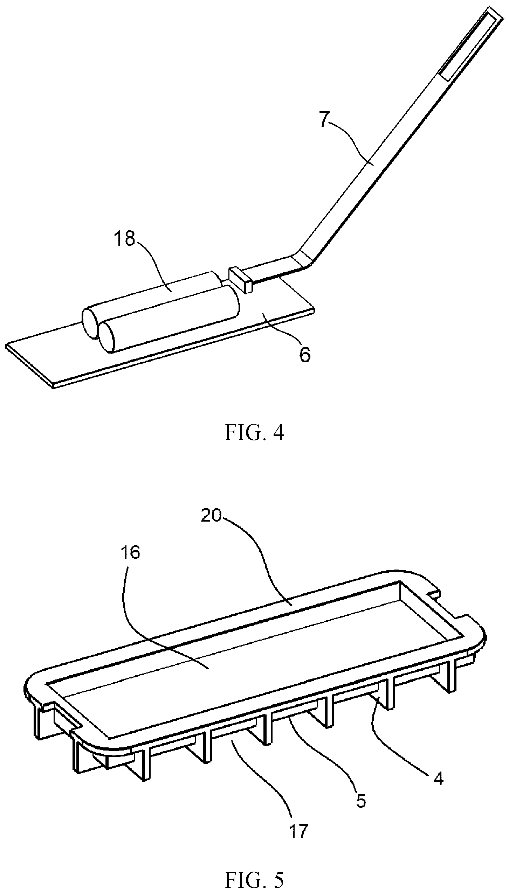

In FIGURE 3 a schematic perspective view of a first part 15 of a second housing of a radiosonde in accordance with at least some embodiments of the present invention is illustrated. The first part 15 comprises a plurality of protrusions 4 in the form of ribs arranged on an outer surface 5 of the first part 15. The first part 15 is configured to be arranged within the first housing. The outer contour formed by the ribs 4 of the first part 15 conforms with the inner surface of the first cover 8 shown in FIGURE 2. The ribs 4 are provided in different planes. The planes are typically parallel to each other. Additionally, further planes may be provided perpendicular to the previously mentioned parallel planes. Thus, air pockets 17 and/or air channels are provided between adjacent ribs 4, the outer surface 5 of the first part 15 and the inner surface first cover 8 of the first housing. The first part 15 further comprises a flange 20 configured to be coupled to the flange of the second part 16 shown in FIGURE 5. The material of the first part 15 may be, for example, a second biodegradable material such as plant-based material.

In FIGURE 4 a schematic perspective view of a measurement unit of a radiosonde in accordance with at least some embodiments of the present invention is illustrated. The measurement unit comprises a printed circuit board 6, an energy source in the form of one or more batteries, for example two replaceable batteries, and a measurement boom 7. The printed circuit board 6 and the energy source 18 are configured to be arranged within the second housing. The printed circuit board 6 comprises measurement and telecommunication electronics. The printed circuit board 6 may, for example comprise a processor, a memory, a transmitter, and a receiver. Signals received from a temperature sensor and a humidity sensor comprised by the measurement boom 7 and/or signals received from a pressure sensor comprised by the radiosonde may be processed and measurement data may be transmitted by the transmitter to a ground station during use of the radiosonde. Additionally, data obtained from signals received from an external positioning system such as a GPS satellite may be transmitted by the transmitter to the ground station during use of the radiosonde.

In FIGURE 5 a schematic perspective view of a second part 16 of a second housing of a radiosonde in accordance with at least some embodiments of the present invention is illustrated. The second part 16 comprises a plurality of protrusions 4 in the form of ribs arranged on its outer surface 5. The second part 16 is configured to be arranged within the first housing. The outer contour formed by the ribs 4 of the second part 16 conforms with the inner surface of the second cover 9 shown in FIGURE 6. The ribs 4 are provided in different planes. The planes are typically parallel to each other. Additionally, further planes may be provided perpendicular to the previously mentioned parallel planes. Thus, air pockets 17 and/or air channels are provided between adjacent ribs 4, the outer surface 5 of the second part 16 and the inner surface of the second cover 9 of the first housing. The second part 16 further comprises a flange 20 configured to be coupled to the flange of the first part 15 shown in FIGURE 3. The material of the second part 16 may be, for example, the second biodegradable material.

In FIGURE 6 a schematic perspective view of a second cover 9 of a first housing of a radiosonde in accordance with at least some embodiments of the present invention is illustrated. As can be seen, an indentation or a groove 19 is arranged in the outer surface of the second cover 9 in order to provide space for a coupler or a second strap 12 of a coupler as shown in FIGURE 9. The second cover 9 of the first housing may be made of the first biodegradable material.

In FIGURE 7 a schematic perspective view of a string pin 13 of a radiosonde in accordance with at least some embodiments of the present invention is illustrated. The string pin 13 comprises an eye 23 at a first end. A string can be connected to the eye 23 for connecting the radiosonde to a balloon. Further, the string pin 13 comprises a tilting unit 21. The tilting unit 21 is configured to bend or tilt the measurement boom 7 shown in FIGURE 4 into its final measurement position when the string pin 13 is coupled to the first housing, the coupler or a second strap of the coupler as shown in FIGURE 9. The string pin 13 further comprises a coupling portion 22. The coupling portion 22 of the string pin 13 can be coupled to the radiosonde, the first housing or a coupling portion 24 of the second strap as shown in FIGURE 9. The material of the string pin 13 may be at least partially a third biodegradable material.

In FIGURE 8 a schematic perspective view of a first strap 11 of a coupler of a radiosonde in accordance with at least some embodiments of the present invention is illustrated. The first strap 11 is configured to fit into the groove 19 of the first cover 8 of the first housing as shown in FIGURE 2. The material of the first strap 11 may be at least partially a fourth biodegradable material.

In FIGURE 9 a schematic perspective view of a second strap 12 of a coupler of a radiosonde in accordance with at least some embodiments of the present invention is illustrated. The second strap 12 is configured to fit into the groove 19 of the second cover 9 of the first housing as shown in FIGURE 6. The second strap may comprise a coupling portion 24 to which the coupling portion 22 of the string pin 13 may be coupled by, for example, sliding of the coupling portions 22, 24 relative to each other. The first strap 11 as shown in FIGURE 8 and the second strap 12 can further be connected to each other to form the coupler. The material of the second strap 12 is typically identical with the material of the first strap 11.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

In the description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in measurement of parameters of the atmosphere.

### ACRONYMS

- GPS: Global Positioning System

### REFERENCE SIGNS LIST

- 1: radiosonde
- 2: first housing
- 3: second housing
- 4: protrusion
- 5: outer surface of second housing
- 6: printed circuit board
- 7: measurement boom
- 8: first cover of first housing
- 9: second cover of first housing
- 10: coupler
- 11: first strap of coupler
- 12: second strap of coupler
- 13: string pin
- 14: cut portion
- 15: first part of second housing
- 16: second part of second housing
- 17: air pocket
- 18: energy source
- 19: groove
- 20: flange
- 21: tilting unit
- 22: coupling portion of string pin
- 23: eye
- 24: coupling portion of second strap

### CITATION LIST

### Patent Literature

DE 202013104586 U1

## Claims

1. A radiosonde (1) comprising:
- a first housing (2),
- a measurement boom (7) partially extending through a part of the first housing (2),
**characterized in that**
- the first housing (2) is made of a first biodegradable material,
- the radiosonde further comprises a second housing (3) arranged within the first housing (2),
- wherein the second housing (3) is made of a second biodegradable material,
- wherein the second housing (3) comprises a plurality of protrusions (4) arranged on an outer surface (5) of the second housing (3) or wherein the first housing (2) comprises a plurality of protrusions (4) arranged on an inner surface of the first housing (2),
- wherein a printed circuit board (6) is arranged within the second housing and the measurement boom (7) is coupled to the printed circuit board (3), and
- wherein the measurement boom (7) coupled to the printed circuit board (6) further partially extends through a part of the second housing (3).

2. The radiosonde (1) according to claim 1, wherein the first housing (2) comprises at least two covers (8, 9).

3. The radiosonde (1) according to claim 2, wherein the radiosonde (1) comprises at least one coupler (10) configured to couple a first cover (8) of the two covers to a second cover (9) of the two covers.

4. The radiosonde (1) according to claim 3, wherein the at least one coupler (10) comprises a first strap (11) and a second strap (12) configured to be coupled to each other, or the at least one coupler (10) comprises a stapler rivet or a stud.

5. The radiosonde (1) according to claim 3 or 4, wherein the at least one coupler (10) is configured to be wrapped around the first cover (8) and the second cover (9).

6. The radiosonde (1) according to any one of claims 3- 5, wherein a material of the at least one coupler (10) is biodegradable.

7. The radiosonde (1) according to any one of claims 3-6, wherein the radiosonde (1) comprises a string pin (13) configured to be coupled to the radiosonde (1), the first housing (2) or the at least one coupler (10).

8. The radiosonde (1) according to claim 7, wherein the string pin (13) is configured to bend or tilt the measurement boom (7) into its measurement position when being coupled to the radiosonde (1), the first housing (2) or the at least one coupler (10).

9. The radiosonde (1) according to any one of claims 1-8, wherein the first housing (2) comprises a cut portion (14) forming a feedthrough for the measurement boom (7).

10. The radiosonde (1) according to any one of claims 1-9, wherein the second housing (2) comprises at least two parts (15, 16).

11. A method of manufacturing a radiosonde (1), the method comprising:
- providing a first housing (2),
- coupling a measurement boom (7) to the first housing (2) such that the measurement boom (7) partially extends through a part of the first housing (2), **characterized by**
- making the first housing (2) of a first biodegradable material,
- arranging a second housing (3) within the first housing (2),
- wherein the second housing (3) is made of a second biodegradable material,
- arranging a plurality of protrusions (4) on an outer surface (5) of the second housing (3) or arranging a plurality of protrusions (4) on an inner surface of the first housing (2),
- arranging a printed circuit board (6) within the second housing (3), and
- coupling the measurement boom (7) to the printed circuit board (6) such that the measurement boom (7) further partially extends through a part of the second housing (3).

12. The method according to claim 11, further comprising:
- providing a cut portion through the first housing (2) prior to coupling the measurement boom (7) or arranging a part of the measurement boom (7) between two covers (8, 9) of the first housing (2).

13. The method according to claim 11 or 12, yet further comprising:
- coupling a first cover (8) of the first housing (2) to a second cover (9) of the first housing (2) by at least one coupler (10).

14. The method according to claim 13, even further comprising:
- coupling a string pin (13) to the at least one coupler (10), thus tilting or bending the measurement boom (7) into its measurement position.

## Patentansprüche

1. Radiosonde (1) umfassend:
- ein erstes Gehäuse (2),
- einen Messausleger (7), der sich teilweise durch einen Teil des ersten Gehäuses (2) erstreckt,
**dadurch gekennzeichnet, dass**
- das erste Gehäuse (2) aus einem ersten biologisch abbaubaren Material hergestellt ist,
- die Radiosonde weiter ein zweites Gehäuse (3) umfasst, das innerhalb des ersten Gehäuses (2) angeordnet ist,
- wobei das zweite Gehäuse (3) aus einem zweiten biologisch abbaubaren Material hergestellt ist,
- wobei das zweite Gehäuse (3) eine Vielzahl von Vorsprüngen (4) umfasst, die auf einer Außenfläche (5) des zweiten Gehäuses (3) angeordnet sind, oder wobei das erste Gehäuse (2) eine Vielzahl von Vorsprüngen (4) umfasst, die auf einer Innenfläche des ersten Gehäuses (2) angeordnet sind,
- wobei innerhalb des zweiten Gehäuses eine Leiterplatte (6) angeordnet ist und der Messausleger (7) mit der Leiterplatte (3) gekoppelt ist und
- wobei der mit der Leiterplatte (6) gekoppelte Messausleger (7) sich weiter teilweise durch einen Teil des zweiten Gehäuses (3) erstreckt.

2. Radiosonde (1) nach Anspruch 1, wobei das erste Gehäuse (2) mindestens zwei Abdeckungen (8, 9) umfasst.

3. Radiosonde (1) nach Anspruch 2, wobei die Radiosonde (1) mindestens einen Koppler (10) umfasst, der dazu konfiguriert ist, eine erste Abdeckung (8) der beiden Abdeckungen mit einer zweiten Abdeckung (9) der beiden Abdeckungen zu koppeln.

4. Radiosonde (1) nach Anspruch 3, wobei der mindestens eine Koppler (10) einen ersten Riemen (11) und einen zweiten Riemen (12) umfasst, die dazu konfiguriert sind, miteinander gekoppelt zu werden, oder wobei der mindestens eine Koppler (10) einen Hefterniet oder einen Bolzen umfasst.

5. Radiosonde (1) nach Anspruch 3 oder 4, wobei der mindestens eine Koppler (10) dazu konfiguriert ist, um die erste Abdeckung (8) und die zweite Abdeckung (9) gewickelt zu werden.

6. Radiosonde (1) nach einem der Ansprüche 3-5, wobei ein Material des mindestens einen Kopplers (10) biologisch abbaubar ist.

7. Radiosonde (1) nach einem der Ansprüche 3-6, wobei die Radiosonde (1) einen Strangstift (13) umfasst, der dazu konfiguriert ist, mit der Radiosonde (1), dem ersten Gehäuse (2) oder dem mindestens einen Koppler (10) gekoppelt zu werden.

8. Radiosonde (1) nach Anspruch 7, wobei der Strangstift (13) dazu konfiguriert ist, den Messausleger (7) in seine Messposition zu biegen oder zu kippen, wenn er mit der Radiosonde (1), dem ersten Gehäuse (2) oder dem mindestens einen Koppler (10) gekoppelt ist.

9. Radiosonde (1) nach einem der Ansprüche 1-8, wobei das erste Gehäuse (2) einen ausgeschnittenen Abschnitt (14) aufweist, der eine Durchführung für den Messausleger (7) bildet.

10. Radiosonde (1) nach einem der Ansprüche 1-9, wobei das zweite Gehäuse (2) mindestens zwei Teile (15, 16) umfasst.

11. Verfahren zum Herstellen einer Radiosonde (1), wobei das Verfahren umfasst:
- Bereitstellen eines ersten Gehäuses (2),
- Koppeln eines Messauslegers (7) mit dem ersten Gehäuse (2), so dass sich der Messausleger (7) teilweise durch einen Teil des ersten Gehäuses (2) erstreckt,
**gekennzeichnet durch**
- Herstellen des ersten Gehäuses (2) aus einem ersten biologisch abbaubaren Material,
- Anordnen eines zweiten Gehäuses (3) innerhalb des ersten Gehäuses (2),
- wobei das zweite Gehäuse (3) aus einem zweiten biologisch abbaubaren Material hergestellt ist,
- Anordnen einer Vielzahl von Vorsprüngen (4) auf einer Außenfläche (5) des zweiten Gehäuses (3) oder Anordnen einer Vielzahl von Vorsprüngen (4) auf einer Innenfläche des ersten Gehäuses (2),
- Anordnen einer Leiterplatte (6) innerhalb des zweiten Gehäuses (3) und
- Koppeln des Messauslegers (7) mit der Leiterplatte (6), so dass sich der Messausleger (7) weiter teilweise durch einen Teil des zweiten Gehäuses (3) hindurch erstreckt.

12. Verfahren nach Anspruch 11, das weiter umfasst:
- Bereitstellen eines ausgeschnittenen Abschnitts durch das erste Gehäuse (2) vor Ankoppeln des Messauslegers (7) oder Anordnen eines Teils des Messauslegers (7) zwischen zwei Abdeckungen (8, 9) des ersten Gehäuses (2).

13. Verfahren nach Anspruch 11 oder 12, das weiter Folgendes umfasst:
- Koppeln einer ersten Abdeckung (8) des ersten Gehäuses (2) mit einer zweiten Abdeckung (9) des ersten Gehäuses (2) durch mindestens einen Koppler (10).

14. Verfahren nach Anspruch 13, das weiter noch Folgendes umfasst:
- Koppeln eines Strangstifts (13) mit dem mindestens einen Koppler (10), wodurch der Messausleger (7) in seine Messposition gekippt oder gebogen wird.

## Revendications

1. Radiosonde (1) comprenant :
- un premier boîtier (2),
- un bras de mesure (7) s'étendant partiellement à travers une partie du premier boîtier (2),
**caractérisée en ce que**
- le premier boîtier (2) est composé d'un premier matériau biodégradable,
- la radiosonde comprend en outre un second boîtier (3) agencé à l'intérieur du premier boîtier (2),
- dans laquelle le second boîtier (3) est composé d'un second matériau biodégradable,
- dans laquelle le second boîtier (3) comprend une pluralité de saillies (4) agencées sur une surface extérieure (5) du second boîtier (3) ou dans laquelle le premier boîtier (2) comprend une pluralité de saillies (4) agencées sur une surface intérieure du premier boîtier (2),
- dans laquelle une carte de circuit imprimé (6) est agencée à l'intérieur du second boîtier et le bras de mesure (7) est couplé à la carte de circuit imprimé (3), et
- dans laquelle le bras de mesure (7) couplé à la carte de circuit imprimé (6) s'étend en outre partiellement à travers une partie du second boîtier (3).

2. Radiosonde (1) selon la revendication 1, dans laquelle le premier boîtier (2) comprend au moins deux couvercles (8, 9).

3. Radiosonde (1) selon la revendication 2, dans laquelle la radiosonde (1) comprend au moins un coupleur (10) configuré pour coupler un premier couvercle (8) des deux couvercles à un second couvercle (9) des deux couvercles.

4. Radiosonde (1) selon la revendication 3, dans laquelle le au moins un coupleur (10) comprend un premier étrier (11) et un second étrier (12) configurés pour être couplés l'un à l'autre, ou le au moins un coupleur (10) comprend un rivet d'agrafeuse ou un goujon.

5. Radiosonde (1) selon la revendication 3 ou 4, dans laquelle le au moins un coupleur (10) est configuré pour être enroulé autour du premier couvercle (8) et du second couvercle (9).

6. Radiosonde (1) selon l'une quelconque des revendications 3-5, dans laquelle un matériau du au moins un coupleur (10) est biodégradable.

7. Radiosonde (1) selon l'une quelconque des revendications 3-6, dans laquelle la radiosonde (1) comprend une tige (13) de chaîne configurée pour être couplée à la radiosonde (1), au premier boîtier (2) ou au au moins un coupleur (10).

8. Radiosonde (1) selon la revendication 7, dans laquelle la tige (13) de chaîne est configurée pour plier ou incliner le bras de mesure (7) dans sa position de mesure lorsqu'elle est couplée à la radiosonde (1), au premier boîtier (2) ou au au moins un coupleur (10).

9. Radiosonde (1) selon l'une quelconque des revendications 1-8, dans laquelle le premier boîtier (2) comprend une partie découpée (14) formant un passage pour le bras de mesure (7).

10. Radiosonde (1) selon l'une quelconque des revendications 1-9, dans laquelle le second boîtier (2) comprend au moins deux parties (15, 16).

11. Procédé de fabrication d'une radiosonde (1), le procédé comprenant :
- la fourniture d'un premier boîtier (2),
- le couplage d'un bras de mesure (7) au premier boîtier (2) de telle sorte que le bras de mesure (7) s'étende partiellement à travers une partie du premier boîtier (2),
**caractérisé par**
- la fabrication du premier boîtier (2) en un premier matériau biodégradable,
- l'agencement d'un second boîtier (3) à l'intérieur du premier boîtier (2),
- dans lequel le second boîtier (3) est composé d'un second matériau biodégradable,
- l'agencement d'une pluralité de saillies (4) sur une surface extérieure (5) du second boîtier (3) ou l'agencement d'une pluralité de saillies (4) sur une surface intérieure du premier boîtier (2),
- l'agencement d'une carte de circuit imprimé (6) à l'intérieur du second boîtier (3), et
- le couplage du bras de mesure (7) à la carte de circuit imprimé (6) de telle sorte que le bras de mesure (7) s'étende en outre partiellement à travers une partie du second boîtier (3).

12. Procédé selon la revendication 11, comprenant en outre :
- la fourniture d'une partie découpée à travers le premier boîtier (2) avant le couplage du bras de mesure (7) ou l'agencement d'une partie du bras de mesure (7) entre deux couvercles (8, 9) du premier boîtier (2).

13. Procédé selon la revendication 11 ou 12, comprenant encore en outre :
- le couplage d'un premier couvercle (8) du premier boîtier (2) à un second couvercle (9) du premier boîtier (2) par au moins un coupleur (10).

14. Procédé selon la revendication 13, comprenant même en outre :
- le couplage d'une tige (13) de chaîne au au moins un coupleur (10), ce qui permet d'incliner ou de plier le bras de mesure (7) dans sa position de mesure.
